# FASCICULE DE BREVET EUROPEEN

(11) **EP 3 086 139 B1**
(45) Date de publication et mention de la délivrance du brevet: **05.09.2018**
(21) Numéro de dépôt: 16166522.9
(22) Date de dépôt: 22.04.2016
(51) Int. Cl.: G01T 1/185, G01T 3/00

(54) **DISPOSITIF DE DETECTION SPHERIQUE COMPRENANT UNE CANNE DE MAINTIEN**
KUGELFÖRMIGEN DETEKTIONSVORRICHTUNG MIT EINEM HALTESTAB
SPHERICAL DETECTION DEVICE COMPRISING A HOLDING ROD

(30) Priorité: 24.04.2015 FR 1553682
(43) Date de publication de la demande: 26.10.2016
(73) Titulaire: COMMISSARIAT À L'ÉNERGIE ATOMIQUE ET AUX ÉNERGIES ALTERNATIVES, 75015 Paris (FR)
(72) Inventeur: GIOMATARIS, Ioannis, 78000 VERSAILLES (FR); MAGNIER, Patrick, 91400 ORSAY (FR); DERRE, Jacques, 92330 SCEAUX (FR)
(74) Mandataire: Cabinet Camus Lebkiri

(56) Documents cités:
- EP-A1- 2 492 711
- JP-A- 2004 020 249
- US-A1- 2006 138 340
- Ali Dastgheibi Fard: "Etude d'un détecteur sphérique gazeux pour la recherche d'événements rares à bas seuil en énergie", Archive ouverte HAL , 2014, pages Frontpg.-194, XP002752714, Université Paris-Sud Extrait de l'Internet: URL:https://tel.archives-ouvertes.fr/tel-0 1134076/file/VD2_DASTGHEIBI_FARD_ALI_31102 014.pdf [extrait le 2016-01-08]

## Description

### DOMAINE TECHNIQUE

L'invention concerne un dispositif sphérique pour la détection de particules, telles que des neutrons, ou pour la détection de rayonnements ionisants comportant une canne de maintien.

### ETAT DE LA TECHNIQUE

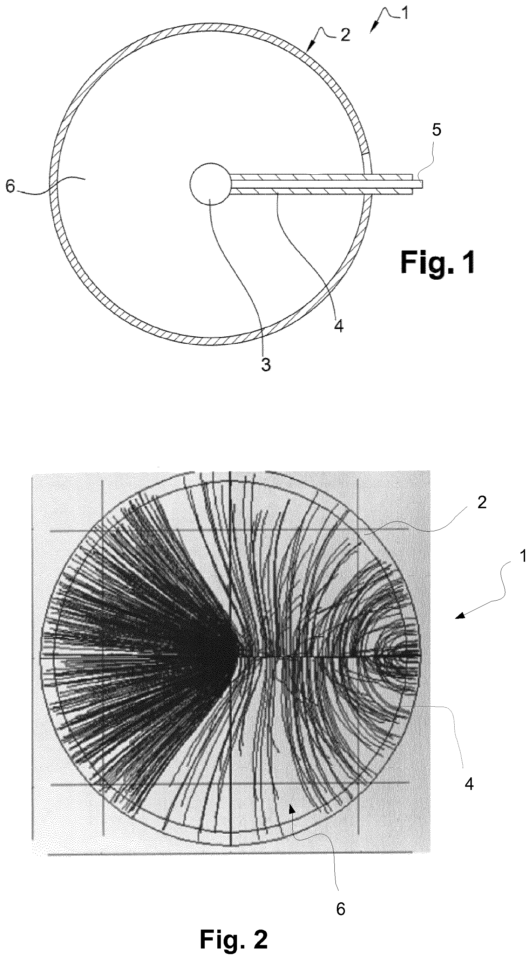

Un détecteur sphérique, tel qu'illustré à la figure 1, comporte généralement une première électrode 2 (la cathode) formant une enceinte sphérique creuse 6 remplie d'un gaz qui sert de milieu d'ionisation et de milieu d'amplification. Une deuxième électrode 3 (l'anode) en forme de bille est placée et maintenu au centre de la première électrode 2 sphérique au moyen d'une canne de maintien 4.

Ce type de détecteur est adapté à la détection de particules non ionisantes comme les neutrons, les neutrinos, le rayonnement gamma ou des particules ionisantes comme les électrons, les positrons et les muons. Le gaz remplissant l'enceinte sphérique est ainsi choisi afin que les particules interagissent avec lui pour créer des charges qui migreront vers l'anode et qui seront amplifiées pour créer le signal à mesurer.

La canne de maintien 4 permet à la fois de positionner l'anode au centre du dispositif 1 et de raccorder électriquement l'anode 3 à des moyens de contrôle/commande via des moyens de liaison électrique 5 traversant ladite canne de maintien 4.

La première électrode sphérique 2 est reliée à la masse tandis que la deuxième électrode centrale 3 est portée à un haut potentiel positif. La détection se fait par l'ionisation des particules de gaz qui produisent alors un ion chargé positivement et un électron chargé négativement. Le champ électrique appliqué entre les électrodes permet :
- de faire dériver les électrons créés par ionisation du gaz jusqu'à la bille en créant un champ radial, et ;
- de produire une « avalanche » à proximité de la bille pour amplifier le signal.

La présence de la canne de maintien 4 connectée à la masse et traversant l'enceinte sphérique 6 perturbe fortement le champ électrique à l'intérieur de celle-ci, notamment au niveau de la demi-sphère intégrant la canne de maintien 4 comme illustrée à la figure 2.

Afin de minimiser les perturbations du champ électrique engendrées par la canne de maintien à l'intérieur de l'enceinte sphérique, il a été proposé de positionner un élément isolant de forme conique à l'extrémité de la canne de maintien, comme notamment décrit dans le document Ali Dastqheibi Fard, « Etude d'un détecteur sphérique gazeux pour la recherché d'événements rares à bas seuil en énergie », Archive ouverte HAL, 2014, Université Paris-Sud*.*

Avec l'utilisation d'un tel élément isolant, le champ électrique généré dans l'enceinte sphérique est moins perturbé à proximité de la canne de maintien. On peut estimer que la zone perturbée est inférieure à 20% du volume total de la sphère, alors que sans l'utilisation d'un élément isolant de forme conique à l'extrémité de la canne de maintien, environ 50% de la sphère est perturbée.

Cependant, bien que l'élément isolant de forme conique permette de minimiser les perturbations du champ électrique, l'élément isolant de forme conique crée des phénomènes de claquages électriques entre l'anode et la canne de maintien.

### EXPOSE DE L'INVENTION

Dans ce contexte, l'invention vise à proposer un dispositif sphérique de détection de particules ou de rayonnements ionisants permettant de minimiser les perturbations du champ électrique engendrées par une canne de maintien à l'intérieur de l'enceinte sphérique d'un détecteur sphérique et notamment dans la région proche de la canne de maintien, tout en empêchant les phénomènes de claquages électriques entre l'anode et la canne de maintien.

A cette fin, l'invention concerne un dispositif sphérique de détection de particules ou de rayonnements ionisants selon la revendication 1, ledit dispositif comportant une cathode formant une sphère creuse remplie d'un gaz d'ionisation, et ; une anode placée au centre de ladite sphère creuse par l'intermédiaire d'une canne de maintien ; ledit dispositif sphérique de détection étant caractérisé en ce que ladite canne de maintien comporte un élément isolant formée par au moins une plaque positionnée à proximité d'une première extrémité selon une direction perpendiculaire à l'axe longitudinal de la canne de maintien, ladite première extrémité étant adaptée pour maintenir ladite anode dudit dispositif.

Contrairement à un élément isolant de forme conique, l'élément isolant en forme de plaque a pour avantage de présenter une forme abrupte qui permet de rompre la propagation du champ électrique. Ainsi, la forme en plaque de l'élément isolant permet d'empêcher, plus efficacement qu'un élément isolant conique, les claquages électriques entre l'anode placée au centre de la sphère et la canne de maintien.

Le dispositif sphérique de détection selon l'invention peut également présenter une ou plusieurs des caractéristiques ci-dessous, considérées individuellement ou selon toutes les combinaisons techniquement possibles :
- ledit élément isolant forme ladite première extrémité de ladite canne de maintien ;
- ledit élément isolant comporte une pluralité de plaques isolantes positionnées selon une direction perpendiculaire à l'axe longitudinal de la canne de maintien ;
- lesdites plaques isolantes de ladite pluralité ont la forme d'un disque, et deux plaques isolantes adjacentes de ladite pluralité présentent des diamètres différents ;
- ledit élément isolant comporte une contre-électrode ;
- ledit élément isolant comporte une première plaque isolante, une deuxième plaque isolante et une troisième plaque isolante, ladite deuxième plaque isolante comportant un logement adapté pour intégrer ladite contre-électrode ;
- ladite canne de maintien comporte un élément résistif entourant partiellement ledit élément isolant ;
- l'élément résistif est au contact dudit élément isolant et positionné entre la première plaque dudit élément isolant et l'anode ;
- ladite canne de maintien est creuse de manière à permettre la traversée de moyens de liaison électrique et/ou de moyens de lecture de signal.

Ledit dispositif de détection selon l'invention peut également présenter une ou plusieurs des caractéristiques ci-dessous, considérées individuellement ou selon toutes les combinaisons techniquement possibles :
- ladite canne de maintien comporte un élément isolant positionné à proximité d'une première extrémité sur laquelle ladite anode est solidarisée et un élément résistif, ladite canne de maintien étant traversée par des moyens de liaison électrique permettant de relier électriquement ladite anode à un premier potentiel, et ledit élément résistif de ladite canne de maintien à un deuxième potentiel, ledit deuxième potentiel étant inférieur au premier potentiel appliqué à ladite anode ;
- ladite canne de maintien comporte une contre-électrode, ladite canne de maintien étant traversée par des moyens de liaison électrique permettant de relier électriquement ladite contre-électrode à un troisième potentiel, ledit troisième potentiel étant compris entre le premier potentiel et le deuxième potentiel ;
- ladite anode est formée par une bille isolante et par au moins deux billes conductrices positionnées autour de ladite bille isolante et à une même distance prédéterminée de ladite bille isolante ;
- lesdites au moins deux billes conductrices sont reliées à ladite bille isolante par l'intermédiaire de tiges-supports placées perpendiculairement à la surface de la ladite bille isolante ;
- lesdites tige-supports sont creuses ;
- ladite bille isolante et/ou lesdites au moins deux billes conductrices sont creuses ;
- lesdites au moins deux billes conductrices sont réparties uniformément autour de ladite bille isolante ;
- l'anode comporte au moins huit billes conductrices ;
- l'anode comporte quatorze billes conductrices ;
- ledit dispositif sphérique est un dispositif pour la détection de neutrons.

### BREVES DESCRIPTIONS DES FIGURES

D'autres caractéristiques et avantages de l'invention ressortiront plus clairement de la description qui en est donnée ci-dessous, à titre indicatif et nullement limitatif, en référence aux figures suivantes :
- la figure 1, déjà décrite précédemment, illustre schématiquement une vue en coupe d'un dispositif sphérique de détection selon l'état de la technique ;
- la figure 2 est une représentation schématique du champ électrique résultant de l'application d'une différence de potentiel entre les électrodes d'un dispositif sphérique de détection selon l'état de la technique, illustré à la figure 1 avec une canne de maintien selon l'art antérieur ;
- la figure 3a est une représentation schématique d'un premier mode de réalisation d'une canne de maintien d'un dispositif sphérique de détection selon l'invention ;
- la figure 3b est une représentation schématique d'un deuxième mode de réalisation d'une canne de maintien d'un dispositif sphérique de détection selon l'invention ;
- la figure 3c est une représentation schématique d'un troisième mode de réalisation d'une canne de maintien d'un dispositif sphérique de détection selon l'invention ;
- la figure 3d est une représentation schématique d'un quatrième mode de réalisation d'une canne de maintien d'un dispositif sphérique de détection selon l'invention ;
- la figure 4 est une vue schématique d'une alternative de réalisation d'un dispositif de détection comportant un canne de maintien selon l'invention.

### DESCRIPTION D'AU MOINS UN MODE DE REALISATION

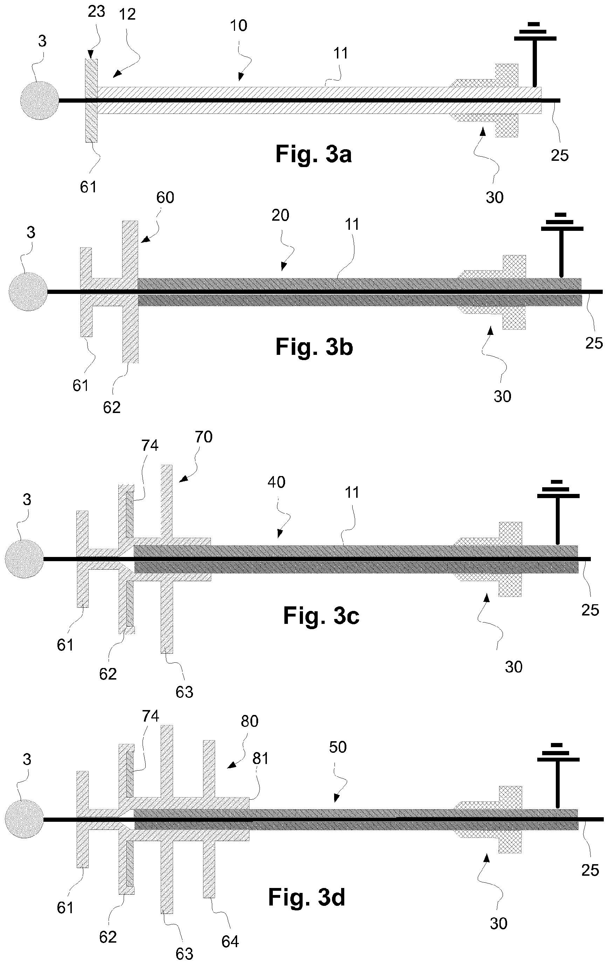

La figure 3a illustre une vue en coupe d'un premier mode de réalisation d'une canne de maintien d'un dispositif sphérique selon l'invention.

La canne de maintien 10 est typiquement utilisée dans un dispositif sphérique de détection tel qu'illustré à la figure 1.

Pour rappel, un dispositif de détection comporte une première électrode formant une enceinte sphérique creuse. La première électrode est reliée à la masse de manière à former une cathode. Le dispositif de détection comporte également une deuxième électrode formant l'anode. La deuxième électrode formant l'anode est positionnée et maintenue au centre de la première électrode au moyen d'une canne de maintien 10 telle que représentée à la figure 3a, la canne de maintien traversant la paroi de l'enceinte 6.

Le fonctionnement d'un tel dispositif de détection est notamment décrit dans la demande de brevet FR 3007848 A1. Par conséquent, la présente demande se réfère à ce document et en intègre l'ensemble des caractéristiques décrites dans ce document.

Ainsi, la canne de maintien 10 d'un dispositif sphérique selon l'invention permet de maintenir l'anode 3 au centre de l'enceinte sphérique 6 formant la cathode 2 et permet également de raccorder électriquement l'anode 3.

La canne de maintien 10 est typiquement réalisée en un matériau conducteur (par exemple en acier inoxydable ou en cuivre) ou en un matériau quelconque recouvert d'une couche conductrice. La surface extérieure 11 de la canne de maintien 10 est reliée à la masse.

La canne de maintien 10 est creuse de sorte qu'elle est traversée par des moyens de liaison électrique 25 permettant de placer l'anode 3 à un potentiel HV1 et donc de contrôler le champ électrique appliqué dans l'enceinte 6 du dispositif 1, mais également par des moyens permettant la lecture de signal. Les moyens de liaison électrique 25 sont typiquement des câbles électriques permettant de raccorder électriquement le dispositif à des moyens de contrôle/commande.

La canne de maintien 10 comporte en outre des moyens 30 permettant de solidariser la canne de maintien 10 sur la paroi de l'enceinte sphérique 6 et de réaliser une étanchéité au niveau de la traversée de l'enceinte sphérique 6.

La canne de maintien 10 comporte en outre un élément isolant 23 positionné à proximité de l'extrémité 12 de la canne de maintien 10 destinée à être positionnée dans l'enceinte 6 et à maintenir l'anode 3. Avantageusement, l'extrémité 12 est formée par l'élément isolant 23.

Bien entendu l'élément isolant 23 présente un orifice traversant central pour le passage des moyens de liaison électrique 25 permettant de raccorder l'anode 3 au potentiel voulu.

Selon le premier mode de réalisation illustré à la figure 3a, l'élément isolant 23 présente la forme d'une plaque 61 positionnée perpendiculairement à l'axe longitudinal de la canne de maintien 10. La plaque est par exemple sous la forme d'un disque

L'élément isolant 23 en forme de plaque est réalisé avantageusement dans un matériau plastique très isolant, par exemple du polyétheréthercétone (PEEK).

Ainsi, la canne de maintien 10 d'un dispositif sphérique selon l'invention comportant une extrémité 12 formé par un élément isolant 23 en forme de plaque permet de minimiser les perturbations du champ électrique dans l'enceinte sphérique 6 du dispositif de détection tout en empêchant les claquages électriques pouvant intervenir entre l'anode 3 et la canne de maintien 10.

La forme particulière en plaque de l'élément isolant 23 permet avantageusement d'allonger virtuellement la distance entre l'anode 3 placée à un haut potentiel HV1 et le corps de la canne de maintien 10, tout en bénéficiant des avantages de minimisation des perturbations du champ électrique dans l'enceinte sphérique.

Selon un deuxième mode de réalisation, la canne de maintien 20 d'un dispositif sphérique, illustré à la figure 3b, comporte un élément isolant 60 formé par deux plaques 61, 62 positionnées perpendiculairement à l'axe longitudinal de la canne de maintien 20.

Une première plaque 61 est positionnée à proximité de l'anode 3 de manière identique au premier mode de réalisation illustré à la figure 3a et une deuxième plaque 62 est ajoutée et positionnée à quelques centimètres de la première plaque 61, par exemple entre 1 et 2 cm, et par exemple à 1,5 cm.

Avantageusement le diamètre des deux plaques 61, 62 est différent, le diamètre d1 de la première plaque 61 étant inférieur au diamètre d2 de la deuxième plaque 62. A titre d'exemple, la première plaque 61 présente un diamètre d1 de 1,5 cm et la deuxième plaque 62 présente un diamètre d2 de 2,5 cm.

Il est également possible d'utiliser une contre-électrode alimentée par un potentiel électrique HV3 pour corriger le champ électrique. La figure 3c illustre à cet effet une canne de maintien 40 selon l'invention comportant un élément isolant 70 présentant une pluralité de plaques 61, 62, 63 ainsi qu'une contre-électrode 74. L'élément isolant 70 comporte une contre-électrode 74 insérée dans un logement ménagé au niveau de la deuxième électrode 62. La contre-électrode 74 est positionnée sur la face arrière de la deuxième plaque 62 de sorte que celle-ci ne soit pas positionnée en regard de l'anode 3. En effet, l'anode 3 étant au potentiel HV1 et la contre-électrode 74 à un potentiel HV3, inférieur au potentiel HV1, on évite les phénomènes de claquages en positionnant la contre-électrode 74 au niveau de la face arrière de la deuxième plaque 62. L'élément isolant 70 comporte également une troisième plaque 63 positionnée à l'arrière de la contre-électrode 74 afin d'empêcher les claquages entre la contre-électrode 74 au potentiel HV3 et la surface extérieure 11 de la canne de maintien 40 raccordée à la masse.

La figure 3d illustre un quatrième mode de réalisation de l'invention. Dans ce mode de réalisation, la canne de maintien 50 comporte un élément isolant 80 présentant quatre plaques 61, 62, 63, 64 et une contre-électrode 74 sur la deuxième plaque 62 de manière identique à l'élément isolant 70. D'autres plaques peuvent également être ajoutées derrière la quatrième plaque 64. Les tensions en jeu étant moins grandes qu'au voisinage de l'anode 3, ces plaques (à partir de la quatrième 64) peuvent être plus rapprochées, par exemple avec un espace inter-plaque de 1cm et de diamètre moins grand (par exemple de 1cm).

De façon générale, les plaques de l'élément isolant 23, 60, 70, 80 doivent rompre la propagation du champ électrique. Par conséquent, les plaques doivent présenter des diamètres variables et les espaces inter-plaques doivent également être variables. A titre d'exemple, la première plaque 61 présente un diamètre d1 de 1,5 cm et est positionnée à une distance de 1,2 cm de l'anode. La deuxième plaque 62 présente un diamètre d2 de 1,5cm et est positionnée à une distance de 1,5 cm de la première plaque 61. La troisième plaque 63 présente un diamètre d3 de 3,5cm et est positionnée à une distance de 2cm de la deuxième plaque 62. La quatrième plaque 64 présente un diamètre de 3cm et est positionnée à une distance de 1cm de la troisième plaque 63 et à une distance de 1cm de l'extrémité arrière 81 de l'élément isolant 80.

Un élément résistif (non représenté) peut être ajouté sur le corps de la canne de maintien 10, 20, 40, 50, avantageusement à l'avant de la première plaque 23, 61 et en contact avec l'isolant constituant la première plaque isolante afin de faciliter l'écoulement des charges qui s'accumulent. L'élément résistif est relié électriquement à un deuxième câble électrique traversant également la canne de maintien permettant de connecter électriquement l'élément résistif à un potentiel HV2, inférieur au potentiel HV1 appliqué à l'anode 3, et comprise entre le potentiel HV1 et le potentiel HV3.

L'application de ce potentiel HV2 au niveau de l'extrémité de la canne de maintien 10, 20, 40, 50et à proximité de la bille formant l'anode 3 permet de créer une décharge progressive des charges accumulées sur l'anode 3. Cette décharge progressive permet de faciliter l'écoulement des charges en cas d'accumulation de charges électrostatiques.

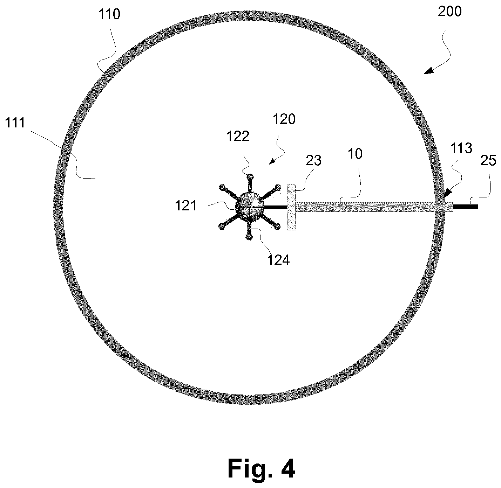

La figure 4 est une vue schématique d'une alternative de réalisation d'un dispositif de détection 200 comportant un canne de maintien 10 selon l'invention. Cette alternative de réalisation est décrite avant le premier mode de réalisation de la canne de maintien illustrée à la figure 3a ; toutefois, cette alternative de réalisation est également réalisable avec l'ensemble des modes de réalisation de la canne de maintien décrit précédemment en référence aux figures 3b, 3c et 3d.

Le dispositif de détection 200 comporte une première électrode 110 formant une enceinte sphérique creuse 111. La première électrode 110 est reliée à la masse de manière à former une cathode.

Le dispositif de détection 200 comporte également une deuxième électrode 120 formant l'anode.

La deuxième électrode 120 formant l'anode est positionnée et maintenue au centre de la première électrode 110 au moyen d'une canne de maintien 10traversant la paroi de l'enceinte 111. Par exemple, l'enceinte sphérique 111 est réalisée en aluminium et présente un diamètre de l'ordre de 200mm avec une épaisseur de paroi de l'ordre de 2mm. L'enceinte sphérique 111 présente au niveau de sa paroi une ouverture 113 permettant le passage de la canne de maintien 10. Bien entendu, il est prévu d'utiliser des moyens d'étanchéité ad-hoc au niveau de la traversée de l'enceinte sphérique 111 pour le passage de la canne de maintien 10.

Dans cette alternative de réalisation, l'anode 3 en forme de bille simple, illustrée précédemment aux figures 3a à 3d, est remplacée par une structure 120 formée par :
- une bille centrale 121 reliée à la canne de maintien 10, 40, 50 ;
- une pluralité de billes satellites 122, i.e. au moins deux, positionnées autour de la bille centrale 121 ;
- des moyens de liaison 124, tels que des tiges-supports, s'étendant selon une direction radiale par rapport à la surface de la bille centrale 121, permettant de positionner et de maintenir les billes satellites 122 autour de la bille centrale 121 et à une certaine distance prédéterminée de la bille centrale 121, cette distance pouvant être nulle.

La bille centrale 121 est une bille isolante réalisé en matériau isolant, par exemple en polyétheréthercétone (ou PEEK pour PolyEtherEtherKetone en langue anglaise). Cette bille centrale isolante est creuse de manière à permettre le passage des moyens de liaison électrique 25 et comporte une pluralité d'orifices radiaux répartis sur le pourtour de la surface de la bille centrale 121 pour le passage des moyens de liaison électrique 25 raccordés à chacune des billes satellites 122 ; le nombre et la répartition des orifices radiaux correspondant au nombre et à la répartition des moyens de liaisons 124 de maintien des billes satellites 122.

Ces tiges-supports 124 sont également creuses de manière à permettre le passage des moyens de liaison électrique 25 à l'intérieur des tiges-supports 124, celles-ci formant ainsi une gaine de protection des moyens de liaison électrique 25.

Les billes satellites 122 sont des billes conductrices réalisées par exemple en acier inoxydable sur lesquelles une tension unique HV1 est appliquée par l'intermédiaire des moyens de liaison électrique 25 qui sont raccordés électriquement aux billes conductrices 122.

Les tiges-supports 124 sont de longueur identique et permettent ainsi de positionner les billes satellites conductrices 122 à équidistance de la bille centrale isolante 121, par exemple, les tiges-supports 124 peuvent présenter une longueur minimum de 2mm.

Une telle géométrie de l'anode 120 en forme de «hérisson» permet ainsi de proposer un détecteur répondant à la fois aux besoins et aux performances des détecteurs sphériques de grandes dimensions et de petites dimensions. En effet, la structure particulière de l'anode 120 lui confère une double propriété : elle se comporte à la fois comme une anode de grande dimension pour la collection des charges et comme une anode de petite dimension avec des champs électriques élevés proches de l'anode pour l'amplification.

On entend par anode de grande dimension, une anode apte à détecter les particules jusqu'au voisinage de la sphère. La taille de l'anode dépend donc de la taille de l'enceinte sphérique mais également du gaz choisi pour la détection ainsi que de la tension appliquée.

On entend par anode de petite dimension, une anode petite par rapport à la taille de la sphère pour ne pas encombrer le volume détecteur et créer des champs électriques assez forts pour provoquer l'amplification (l'intensité des champs électriques étant proportionnelle à ¹/_{r²} où *r* est le rayon de l'anode).

Ainsi l'anode 120 d'un dispositif sphérique selon l'invention permet de collecter les signaux d'avalanche qui sont amplifiés par un préamplificateur miniature à très faible bruit électronique disposé au plus près de la bille centrale isolante 121, voire même à l'intérieur de celle-ci.

Par exemple, pour la détection de particules non ionisantes telles que des neutrons, il est nécessaire d'avoir une pression de gaz dans l'enceinte 111 de quelques bars, par exemple 5 bars, afin d'augmenter leur probabilité d'interaction avec le gaz et de une tension appliquée à l'anode 120 supérieure à 7kV afin de faire migrer les électrons venant de l'enceinte sphérique 121 vers l'anode 120. Inversement, pour la détection de particules très ionisantes, on peut être amené à baisser la pression à l'intérieur de l'enceinte à quelques millibars et à appliquer une tension à l'anode inférieure à 2kV. Pour cette application, il est possible d'utiliser une enceinte sphérique 111 présentant un diamètre de 1,3m avec une anode formée par une bille centrale 121 présentant un diamètre de 10mm et des billes satellites conductrices 122 présentant des diamètres de 2mm positionnées à 2mm de la surface extérieure de la bille centrale 121.

Avantageusement, l'anode 120 est formée par une bille centrale isolante 121 et par au moins huit billes satellites conductrices 122 uniformément réparties autour de la bille centrale 121.

Selon un autre mode avantageux de l'invention, l'anode 120 est formée par une bille centrale isolante 121 et par au moins quatorze billes satellites conductrices 122 uniformément réparties autour de la bille centrale 121.

Naturellement, l'invention n'est pas limitée aux modes de réalisation décrits en référence aux figures et des variantes pourraient être envisagées sans sortir du cadre de l'invention. Par exemple, les dimensions données dans les exemples de réalisation pour les électrodes pourraient varier, tout comme les matériaux constitutifs des électrodes et de la canne de maintien.

## Revendications

1. Dispositif sphérique (1, 200) de détection de particules ou de rayonnements ionisants, ledit dispositif comportant une cathode (2, 110) formant une sphère creuse (6, 111) remplie d'un gaz d'ionisation, une anode (3, 120) placée au centre de ladite sphère creuse (6, 111) par l'intermédiaire d'une canne de maintien (10, 20, 40, 50) ; ledit dispositif sphérique de détection étant **caractérisé en ce que** ladite canne de maintien comporte un élément isolant (23, 60, 70, 80) présentant une plaque isolante (61, 62, 63, 64) positionnée selon une direction perpendiculaire à l'axe longitudinal de la canne de maintien (10, 20, 40, 50) et positionnée à proximité d'une première extrémité (12), ladite première extrémité (12) étant adaptée pour maintenir ladite anode (3) dudit dispositif.

2. Dispositif sphérique (1, 200) de détection de particules ou de rayonnements ionisants selon la revendication précédente **caractérisée en ce que** ledit élément isolant (23, 60, 70, 80) forme ladite première extrémité (12) de ladite canne de maintien (10, 50).

3. Dispositif sphérique (1, 200) de détection de particules ou de rayonnements ionisants selon l'une des revendications précédentes **caractérisée en ce que** ledit élément isolant (60, 70, 80) comporte une pluralité de plaques isolantes (61, 62, 63, 64) positionnées selon une direction perpendiculaire à l'axe longitudinal de la canne de maintien (10, 20, 40, 50).

4. Dispositif sphérique (1, 200) de détection de particules ou de rayonnements ionisants selon la revendication précédente **caractérisée en ce que** lesdites plaques isolantes (61, 62, 63, 64) de ladite pluralité ont la forme d'un disque, et **en ce que** deux plaques isolantes adjacentes de ladite pluralité (61, 62, 63, 64) présentent des diamètres différents.

5. Dispositif sphérique (1, 200) de détection de particules ou de rayonnements ionisants selon l'une des revendications 3 à 4 **caractérisée en ce que** ledit élément isolant (70, 80) comporte une contre-électrode (74).

6. Dispositif sphérique (1, 200) de détection de particules ou de rayonnements ionisants selon la revendication précédente **caractérisée en ce que** ledit élément isolant (70, 80) comporte une première plaque isolante (61), une deuxième plaque isolante (62) et une troisième plaque isolante (63), ladite deuxième plaque isolante (62) comportant un logement adapté pour intégrer ladite contre-électrode (74).

7. Dispositif sphérique (1, 200) de détection de particules ou de rayonnements ionisants selon l'une des revendications précédentes **caractérisée en ce que** ladite canne de maintien comporte un élément résistif entourant partiellement ledit élément isolant.

8. Dispositif sphérique (1, 200) de détection de particules ou de rayonnements ionisants selon la revendication précédente **caractérisée en ce que** l'élément résistif est au contact dudit élément isolant (23, 60, 70, 80) et positionné entre la première plaque (61) dudit élément isolant (23, 60, 70, 80) et l'anode (3).

9. Dispositif sphérique (1, 200) de détection de particules ou de rayonnements ionisants selon l'une des revendications précédentes **caractérisée en ce que** ladite canne de maintien (10, 20, 40, 50) est creuse de manière à permettre la traversée de moyens de liaison électrique et/ou de moyens de lecture de signal.

10. Dispositif sphérique (1, 200) de détection de particules ou de rayonnements ionisants selon l'une des revendications précédentes **caractérisé en ce que** ladite canne de maintien (10, 20, 40, 50) comporte un élément isolant (23, 60, 70, 80) positionné à proximité d'une première extrémité (12) sur laquelle ladite anode (3, 120) est solidarisée et un élément résistif , ladite canne de maintien (10, 20, 40, 50) étant traversée par des moyens de liaison électrique (25) permettant de relier électriquement ladite anode (3, 120) à un premier potentiel (HV1), et ledit élément résistif de ladite canne de maintien à un deuxième potentiel (HV2), ledit deuxième potentiel (HV2) étant inférieur au premier potentiel (HV1) appliqué à ladite anode (3, 120).

11. Dispositif sphérique (1, 200) de détection de particules ou de rayonnements ionisants selon la revendication précédente **caractérisé en ce que** ladite canne de maintien (40, 50) comporte une contre-électrode (74), ladite canne de maintien (40, 50) étant traversée par des moyens de liaison électrique permettant de relier électriquement ladite contre-électrode (74) à un troisième potentiel (HV3), ledit troisième potentiel (HV3) étant compris entre le premier potentiel (HV1) et le deuxième potentiel (HV2).

12. Dispositif sphérique (200) de détection de particules ou de rayonnements ionisants selon l'une des revendications précédentes **caractérisé en ce que** ladite anode (120) est formée par une bille isolante (121) et par au moins deux billes conductrices (122) positionnées autour de ladite bille isolante (121) et à une même distance prédéterminée de ladite bille isolante (121).

13. Dispositif sphérique (200) de détection de particules ou de rayonnements ionisants selon l'une des revendications 12 **caractérisé en ce que** lesdites au moins deux billes conductrices (122) sont reliées à ladite bille isolante (121) par l'intermédiaire de tiges-supports (124) placées perpendiculairement à la surface de la ladite bille isolante (121).

14. Dispositif sphérique (1, 200) de détection de particules ou de rayonnements ionisants selon l'une des revendications précédentes **caractérisé en ce que** ledit dispositif sphérique est un dispositif pour la détection de neutrons.

## Patentansprüche

1. Sphärische Vorrichtung (1, 200) zur Detektion von Partikeln oder ionisierenden Strahlungen, wobei die genannte Vorrichtung eine Kathode (2, 110), die eine mit einem lonisierungsgas gefüllte hohle Kugel (6, 111) bildet, eine im Zentrum der genannten hohlen Kugel (6, 111) mittel eines Haltestabes (10, 20, 40, 50) platzierte Anode (3, 120) umfasst; wobei die genannte sphärische Vorrichtung zur Erfassung **dadurch gekennzeichnet ist, dass** der genannte Haltestab ein isolierendes Element (23, 60, 70, 80) umfasst, das eine isolierende Platte (61, 62, 63, 64) aufweist, die gemäß einer zur Längsachse des Haltestabes (10, 20, 40, 50) lotrechten Richtung positioniert ist und in der Nähe eines ersten Endes (12) positioniert ist, wobei das erste Ende (12) angepasst ist, um die genannte Anode (3) der genannten Vorrichtung zu halten.

2. Sphärische Vorrichtung (1, 200) zur Detektion von Partikeln oder ionisierenden Strahlungen gemäß dem voranstehenden Anspruch, **dadurch gekennzeichnet, dass** das genannte isolierende Element (23, 60, 70, 80) das genannte erste Ende (12) des genannten Haltestabes (10, 50) bildet.

3. Sphärische Vorrichtung (1, 200) zur Detektion von Partikeln oder ionisierenden Strahlungen gemäß einem der voranstehenden Ansprüche, **dadurch gekennzeichnet, dass** das genannte isolierende Element (60, 70, 80) eine Vielzahl von isolierenden Platten (61, 62, 63, 64) umfasst, die gemäß einer lotrechten Richtung zur Längsachse des Haltestabes (10, 20, 40, 50) positioniert sind.

4. Sphärische Vorrichtung (1, 200) zur Detektion von Partikeln oder ionisierenden Strahlungen gemäß dem voranstehenden Anspruch, **dadurch gekennzeichnet, dass** die genannten isolierenden Platten (61, 62, 63, 64) der genannten Vielzahl die Form einer Scheibe haben, und dass zwei an die genannte Vielzahl (61, 62, 63, 64) anliegende isolierende Platten unterschiedliche Durchmesser aufweisen.

5. Sphärische Vorrichtung (1, 200) zur Detektion von Partikeln oder ionisierenden Strahlungen gemäß einem der Ansprüche 3 bis 4, **dadurch gekennzeichnet, dass** das genannte isolierende Element (70, 80) eine Gegenelektrode (74) umfasst.

6. Sphärische Vorrichtung (1, 200) zur Detektion von Partikeln oder ionisierenden Strahlungen gemäß dem voranstehenden Anspruch, **dadurch gekennzeichnet, dass** das genannte isolierende Element (70, 80) eine erste isolierende Platte (61), eine zweite isolierende Platte (62) und eine dritte isolierende Platte (63) umfasst, wobei die zweite isolierende Platte (62) eine Aufnahme umfasst, die geeignet ist, um die genannte Gegenelektrode (74) zu integrieren.

7. Sphärische Vorrichtung (1, 200) zur Detektion von Partikeln oder ionisierenden Strahlungen gemäß einem der voranstehenden Ansprüche, **dadurch gekennzeichnet, dass** der genannte Haltestab ein ohmsches Element umfasst, das das genannte isolierende Element teilweise umgibt.

8. Sphärische Vorrichtung (1, 200) zur Detektion von Partikeln oder ionisierenden Strahlungen gemäß dem voranstehenden Anspruch, **dadurch gekennzeichnet, dass** das ohmsche Element mit dem genannten isolierenden Element (23, 60, 70, 80) in Kontakt ist und zwischen der ersten Platte (61) des genannten isolierenden Elements (23, 60, 70, 80) und der Anode (3) positioniert ist.

9. Sphärische Vorrichtung (1, 200) zur Detektion von Partikeln oder ionisierenden Strahlungen gemäß einem der voranstehenden Ansprüche, **dadurch gekennzeichnet, dass** der genannte Haltestab (10, 20, 40, 50) derart hohl ist, dass die Durchquerung von elektrischen Verbindungsmitteln und / oder Signallesemitteln erlaubt wird.

10. Sphärische Vorrichtung (1, 200) zur Detektion von Partikeln oder ionisierenden Strahlungen gemäß einem der voranstehenden Ansprüche, **dadurch gekennzeichnet, dass** der genannte Haltestab (10, 20, 40, 50) ein isolierendes Element (23, 60, 70, 80), das in der Nähe eines ersten Endes (12) positioniert ist, auf dem die genannte Anode (3, 120) fest befestigt ist, und ein ohmsches Element umfasst, wobei der genannte Haltestab (10, 20, 40, 50) durch elektrische Verbindungsmittel (25) durchquert ist, die das elektrische Verbinden der genannten Anode (3, 120) mit einem ersten Potenzial (HV1), und das genannte ohmsche Element des genannten Haltestabes mit einem zweiten Potenzial (HV2) erlauben, wobei das genannte zweite Potenzial (HV2) kleiner ist als das erste Potenzial (HV1), das auf die genannte Anode (3, 120) angewendet wird.

11. Sphärische Vorrichtung (1, 200) zur Detektion von Partikeln oder ionisierenden Strahlungen gemäß dem voranstehenden Anspruch, **dadurch gekennzeichnet, dass** der genannte Haltestab (40, 50) eine Gegenelektrode (74) umfasst, wobei der genannte Haltestab (40, 50) durch elektrische Verbindungsmittel durchquert ist, die die elektrische Verbindung der genannten Gegenelektrode (74) mit einem dritten Potenzial (HV3) erlauben, wobei das genannte dritte Potenzial (HV3) zwischen dem ersten Potenzial (HV1) und dem zweiten Potenzial (HV2) inbegriffen ist.

12. Sphärische Vorrichtung (200) zur Detektion von Partikeln oder ionisierenden Strahlungen gemäß einem der voranstehenden Ansprüche, **dadurch gekennzeichnet, dass** die genannte Anode (120) durch ein isolierendes Kügelchen (121) und durch wenigstens zwei leitende Kügelchen (122) gebildet ist, die um das genannte isolierende Kügelchen (121) und in einer und derselben vorbestimmten Entfernung von dem genannten isolierenden Kügelchen (121) positioniert sind.

13. Sphärische Vorrichtung (200) zur Detektion von Partikeln oder ionisierenden Strahlungen gemäß einem der Ansprüche 12, **dadurch gekennzeichnet, dass** die genannten wenigstens zwei leitenden Kügelchen (122) mit dem genannten isolierenden Kügelchen (121) über Trägerstifte (124) verbunden sind, die lotrecht zur Oberfläche des genannten isolierenden Kügelchen (121) platziert sind.

14. Sphärische Vorrichtung (1, 200) zur Detektion von Partikeln oder ionisierenden Strahlungen gemäß einem der voranstehenden Ansprüche, **dadurch gekennzeichnet, dass** die genannte sphärische Vorrichtung eine Vorrichtung zur Detektion von Neutronen ist.

## Claims

1. A spherical device (1, 200) for detecting particles or ionizing radiations, said device including a cathode (2, 110) forming a hollow sphere (6, 111) filled with an ionization gas, an anode (3, 120) placed in the centre of said hollow sphere (6, 111) through a holding rod (10, 20, 40, 50); said detecting spherical device being **characterized in that** said holding rod includes an insulating element (23, 60, 70, 80) having an insulating plate (61, 62, 63, 64) positioned along a direction perpendicular to the longitudinal axis of the holding rod (10, 20, 40, 50) and positioned in the proximity of a first end (12), said first end (12) being adapted to hold said anode (3) of said device.

2. The spherical device (1, 200) for detecting particles or ionizing radiations according to the preceding claim, **characterized in that** said insulating element (23, 60, 70, 80) forms said first end (12) of said holding rod (10, 50).

3. The spherical device (1, 200) for detecting particles or ionizing radiations according to one of the preceding claims, **characterized in that** said insulating element (60, 70, 80) includes a plurality of insulating plates (61, 62, 63, 64) positioned along a direction perpendicular to the longitudinal axis of the holding rod (10, 20, 40, 50).

4. The spherical device (1, 200) for detecting particles or ionizing radiations according to the preceding claim, **characterized in that** said insulating plates (61, 62, 63, 64) of said plurality are shaped as a disk, and **in that** two adjacent insulating plates of said plurality (61, 62, 63, 64) have different diameters.

5. The spherical device (1, 200) for detecting particles or ionizing radiations according to one of claims 3 to 4, **characterized in that** said insulating element (70, 80) includes a counter-electrode (74).

6. The spherical device (1, 200) for detecting particles or ionizing radiations according to the preceding claim, **characterized in that** said insulating element (70, 80) includes a first insulating plate (61), a second insulating plate (62), and a third insulating plate (63), said second insulating plate (62) including a housing adapted to integrate said counter-electrode (74).

7. The spherical device (1, 200) for detecting particles or ionizing radiations according to one of the preceding claims, **characterized in that** said holding rod includes a resistive element partially surrounding said insulating element.

8. The spherical device (1, 200) for detecting particles or ionizing radiations according to the preceding claim, **characterized in that** the resistive element is in contact with said insulating element (23, 60, 70, 80) and positioned between the first plate (61) of said insulating element (23, 60, 70, 80) and the anode (3).

9. The spherical device (1, 200) for detecting particles or ionizing radiations according to one of the preceding claims, **characterized in that** said holding rod (10, 20, 40, 50) is hollow so as to allow electrical connecting means and/or signal reading means to pass therethrough.

10. The spherical device (1, 200) for detecting particles or ionizing radiations according to one of the preceding claims, **characterized in that** said holding rod (10, 20, 40, 50) includes an insulating element (23, 60, 70, 80) positioned in the proximity of a first end (12) on which said anode (3, 120) is united and a resistive element, said holding rod (10, 20, 40, 50) being passed through by electrical connecting means (25) enabling said anode (3, 120) to be electrically connected to a first potential (HV1), and said resistive element of said holding rod to be electrically connected to a second potential (HV2), said second potential (HV2) being lower than the first potential (HV1) applied to said anode (3, 120).

11. The spherical device (1, 200) for detecting particles or ionizing radiations according to the preceding claim, **characterized in that** said holding rod (40, 50) includes a counter-electrode (74), said holding rod (40, 50) being passed through by said electrical connecting means enabling said counter-electrode (74) to be electrically connected to a third potential (HV3), said third potential (HV3) being comprised between the first potential (HV1) and the second potential (HV2).

12. The spherical device (200) for detecting particles or ionizing radiations according to one of the preceding claims, **characterized in that** said anode (120) is formed by an insulating ball (121) and by at least two conducting balls (122) positioned around said insulating ball (121) and at a same predetermined distance from said insulating ball (121).

13. The spherical device (200) for detecting particles or ionizing radiations according to claim 12, **characterized in that** said at least two conducting balls (122) are connected to said insulating ball (121) through support shanks (124) placed perpendicular to the surface of said insulating ball (121).

14. The spherical device (1, 200) for detecting particles or ionizing radiations according to one of the preceding claims, **characterized in that** said spherical device is a device for detecting neutrons.
